# EUROPEAN PATENT APPLICATION

(11) **EP 2 744 274 A1**
(43) Date of publication of application: **18.06.2014**
(21) Application number: 12821565.4
(22) Date of filing: 09.08.2012
(51) Int. Cl.: H04W 52/02, H04W 36/00, H04W 88/02

(54) **MOBILE STATION AND MOBILE COMMUNICATION METHOD**

(30) Priority: 10.08.2011 JP 2011174832
(71) Applicant: NTT DOCOMO, INC., Chiyoda-ku Tokyo 100-6150 (JP)
(72) Inventor: NAKAMORI, Takeshi, Tokyo 100-6150 (JP); YAGYU, Kengo, Tokyo 100-6150 (JP)
(74) Representative: HOFFMANN EITLE
(86) International application number: PCT/JP2012/070320
(87) International publication number: WO 2013/022061

(57) **Abstract**

The measurement frequency of a measurement procedure notified by a network is adjusted according to the speed of a mobile station. A mobile station UE according to the present invention includes: a speed detection unit 13 configured to detect the speed of the mobile station UE; and a parameter-scaling selection unit 14 (a determination unit) configured to determine a measurement frequency (specifically, a parameter used for calculating the measurement frequency) on the basis of the detected speed, the measurement frequency being a frequency at which the mobile station UE performs a measurement procedure.

## Description

### TECHNICAL FIELD

The present invention relates to a mobile station and a mobile communication method.

### BACKGROUND ART

According to the WCDMA (Wideband-CDMA) scheme, the LTE (Long Term Evolution) scheme, and the LTE-A (LTE-Advanced) scheme specified in the 3GPP, a mobile station UE is configured to scale or select various network parameter values according to the speed of the mobile station UE.

As a method of detecting the speed, the 3GPP standardizes the method of judging whether the speed is "Low", "Medium", or "High" according to the number of cell handovers within a predetermined interval.

The mobile station UE may be configured to scale various network parameters set for "Low" by using a coefficient for "Medium" or a coefficient for "High" notified by a network in advance, on the basis of the judgment result.

Alternatively, the mobile station UE may be configured to use various network parameters set for "Low", various network parameters set for "Medium", or various network parameters set for "High" which are notified by the network in advance, on the basis of the judgment result.

Assumable network parameters include "Q_{hyst} (hysteresis of the reception level) " and "T_{reselection} (hysteresis in the temporal direction) " used in the case of idle mode, as well as "Hysteresis (hysteresis of the reception level)" and "Time to trigger (TTT) (hysteresis in the temporal direction) "used in the case of connected mode.

An objective of the standard specification described above is as follows. Specifically, if the mobile station UE travels at a high speed, the reception quality of the serving cell is likely to drop rapidly even during a hysteresis period.

In this case, if "Q_{hyst/}T_{reselection} (or Hysteresis/TTT) " takes a large value, the cell reselection procedure or the handover (HO) procedure is delayed accordingly. To cope with this, the specification is designed to scale the hysteresis or select appropriate hysteresis on the basis of a detection result on the speed of the mobile station UE.

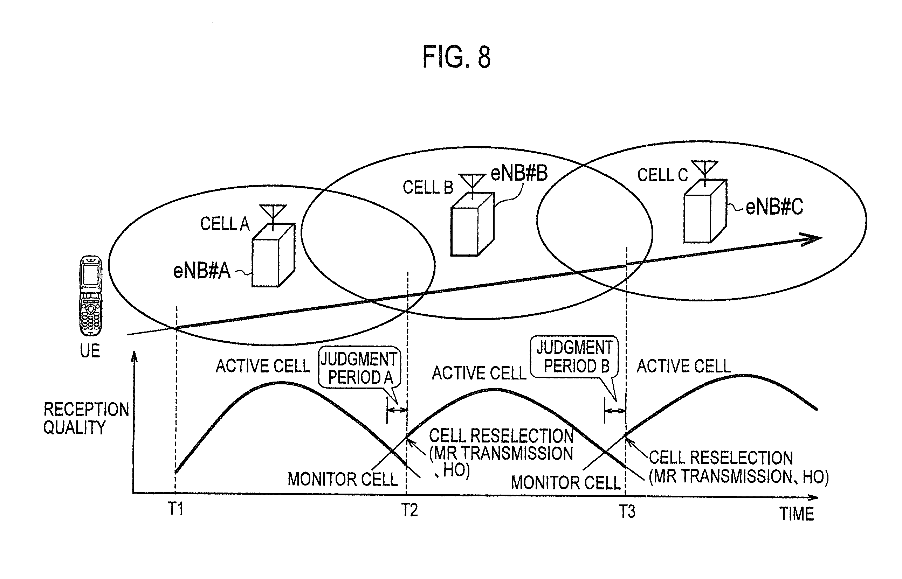

Here, with reference to Fig. 8, a description will be given of an example of a method of detecting the speed of the mobile station UE according to the number of cell handovers.

As shown in Fig. 8, the mobile station UE in idle mode which is on the move carries out the cell reselection procedure at T2 on the basis of a measurement result on the reception quality of cells A/B during a judgment period A, and changes the serving cell (active cell) from the cell A to the cell B. In this event, the cell A shifts its status to the "monitor cell" which is a cell detected by but not camped on by the mobile station UE.

Similarly, the mobile station UE in idle mode which is on the move carries out the cell reselection procedure at T3 based on a measurement result on the reception quality of cells B/C during a judgment period B, and changes the serving cell (active cell) from the cell B to the cell C. In this event, the cell B shifts its status to the "monitor cell" which is a cell detected by but not camped on by the mobile station UE.

Note that, the number of cells where the mobile station UE in idle mode can be camped on (make outgoing calls and receive incoming calls) at a time is only one.

In the meantime, the mobile station UE in connected mode which is on the move is configured to detect at T2 that Event conditions (such as Hysteresis and TTT) notified by the network in advance are satisfied, based on a measurement result on the reception quality of the cells A/B during the judgment period A, and to send a "Measurement Report (MR)" to the network.

Similarly, the mobile station UE in connected mode which is on the move is configured to detect at T3 that the Event conditions (such as Hysteresis and TTT) notified by the network in advance are satisfied, based on a measurement result on the reception quality of the cells B/C during the judgment period B, and to send a "Measurement Report (MR)" to the network.

Here, the mobile station UE is configured to count the number of cell reselection procedures or handover procedures carried out in a time period (TCRₘₐₓ) notified by the network in advance, and to judge that the speed of the mobile station UE is "Medium" or "High" when the number thus counted exceeds the number (NCR_M or NCR_H) notified by the network in advance.

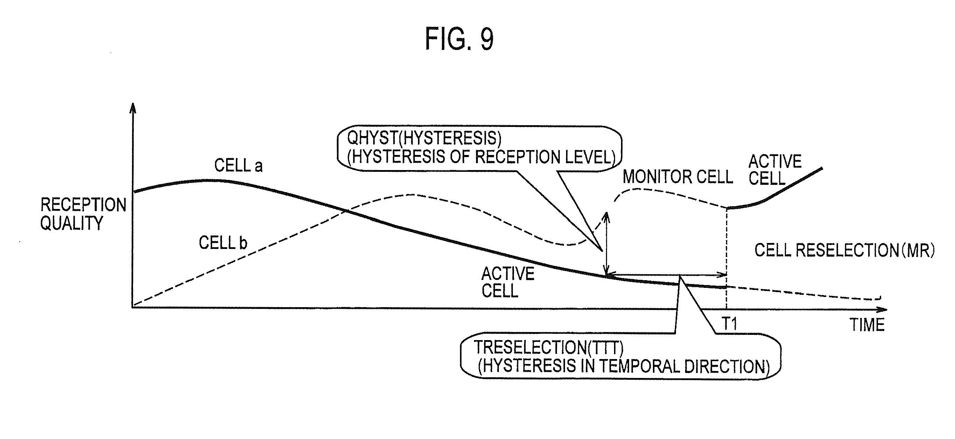

With reference to Fig. 9, an example of a method of judging whether or not to carry out the cell reselection procedure of the mobile station UE, or a method of judging whether or not to send a "Measurement Report (MR)" (or a method of judging whether or not the Event conditions are satisfied) is shown.

Here, in these methods, various kinds of hysteresis are specified as "judgment conditions" for reducing frequent cell reselection between cells.

As shown in Fig. 9, the mobile station UE in idle mode does not carry out the cell reselection procedure immediately even when detecting a cell having better reception quality than the serving cell.

For example, as shown in Fig. 9, the mobile station UE in idle mode is configured to carry out the cell reselection procedure if the state where the reception quality of the "monitor cell (cell b) "exceeds the sum of the reception quality of the "active cell (cell a)" and "Q_{hys}t" lasts "T_{reselection}" seconds or longer.

Meanwhile, the mobile station UE in connected mode is configured to send a "Measurement Report (MR)" to the network if the Event conditions (such as Hysteresis and TTT) are satisfied.

### NON-PATENT DOCUMENT

Non-patent document 1: 3GPP TS25.304
Non-patent document 2: 3GPP TS25.306
Non-patent document 3: 3GPP TS25.331
Non-patent document 4: 3GPP TS36.304
Non-patent document 5: 3GPP TS36.306
Non-patent document 6: 3GPP TS36.331

### SUMMARY OF THE INVENTION

In the conventional mobile communication system described above, according to a detection result on its speed, the mobile station UE scales the network parameters such as hysteresis or selects network parameters corresponding to the speed. However, in the first place, in order to perform the method of judging whether or not to carry out the cell reselection procedure or the method of judging whether or not to send a "Measurement Report (MR)", measurement procedures on the serving cell and neighboring cells need to be performed to acquire the reception quality of these cells in advance.

In the case where the mobile station UE travels at a high speed, in particular, it is important for the mobile station UE to perform the measurement procedures at higher measurement frequency.

However, there is a problem that the network cannot control the measurement frequency of these measurement procedures because the measurement frequency is determined depending on how the mobile station UE is implemented.

The present invention has been therefore made in view of the above problem. An objective of the present invention is to provide a mobile station and a mobile communication method capable of adjusting the measurement frequency of a measurement procedure, which is notified by a network, according to the speed of the mobile station.

A first characteristic of the present invention is a mobile station including: a speed detection unit configured to detect a speed of the mobile station; and a determination unit configured to determine a measurement frequency on the basis of the detected speed, the measurement frequency being a frequency at which the mobile station UE performs a measurement procedure.

A second characteristic of the present invention is a mobile communication method including the steps of: causing a mobile station to detect a speed of the mobile station; and causing the mobile station to determine a measurement frequency on the basis of the detected speed, the measurement frequency being a frequency at which the mobile station performs a measurement procedure.

A third characteristic of the present invention is a radio base station including a transmission unit configured to send a mobile station a network parameter used for the mobile station to determine a measurement frequency of a measurement procedure on the basis of a speed.

### BRIEF DESCRIPTION OF THE DRAWINGS

[Fig. 1] Fig. 1 is an overall configuration diagram of a mobile communication system according to a first embodiment of the present invention.
[Fig. 2] Fig. 2 is a functional block diagram of a mobile station according to the first embodiment of the present invention.
[Fig. 3] Fig. 3 is a diagram for describing an operation for the mobile station according to the first embodiment of the present invention to determine the measurement frequency.
[Fig. 4] Fig. 4 is a functional block diagram of a radio base station according to the first embodiment of the present invention.
[Fig. 5] Fig. 5 is a flowchart describing an operation of the mobile station according to the first embodiment of the present invention.
[Fig. 6] Fig. 6 is a functional block diagram of a mobile station according to a first modification of the present invention.
[Fig. 7] Fig. 7 is a flowchart describing an operation of the mobile station according to the first modification of the present invention.
[Fig. 8] Fig. 8 is a diagram for describing a conventional mobile communication system.
[Fig. 9] Fig. 9 is a diagram for describing the conventional mobile communication system.

### MODE FOR CARRYING OUT THE INVENTION

### (Mobile Communication System according to First Embodiment of Present Invention)

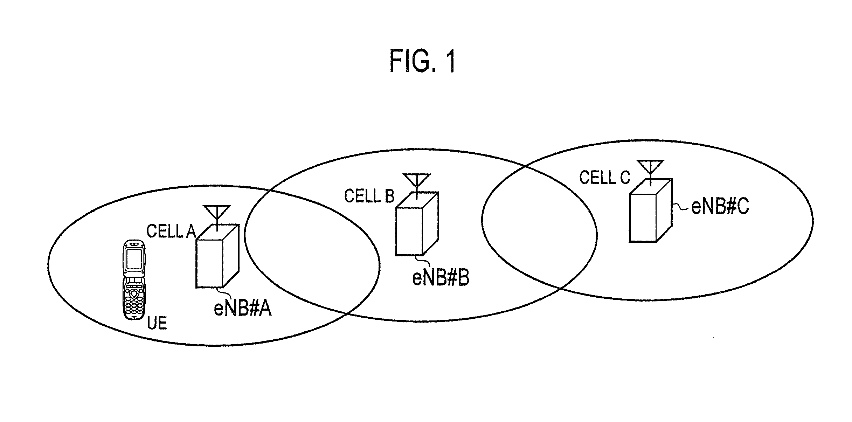

A mobile communication system according to a first embodiment of the present invention will be described with reference to Figs. 1 to 5.

The mobile communication system according to this embodiment is a LTE/LTE-A mobile communication system. As shown in Fig. 1, the mobile communication system includes: a radio base station eNB#A configured to manage a cell A; a radio base station eNB#B configured to manage a cell B; and a radio base station eNB#C configured to manage a cell C.

Here, a mobile station UE supporting the LTE-A scheme is capable of performing "carrier aggregation (CA)", i.e., communicating with multiple carriers (component carriers: CCs) at the same time in the LTE-A mobile communication system.

Note that, the CCs include a "primary CC (PCC)" and a "secondary CC (SCC)".

The mobile station UE performing "CA" is configured to always perform communications on the PCC. Here, the serving cell on the PCC is called a "Pcell".

On the other hand, the mobile station UE performing "CA" is configured to perform communications on the SCC not always but only when data to be sent or received exists ("deactive state"). Here, the serving cell on the SCC is called a "Scell".

Even in "deactive state", the mobile station UE needs to perform a measurement procedure on the Scell or another cell on the SCC at constant time intervals. A network is configured to specify the measurement frequency of this measurement procedure by using "measCycleScell".

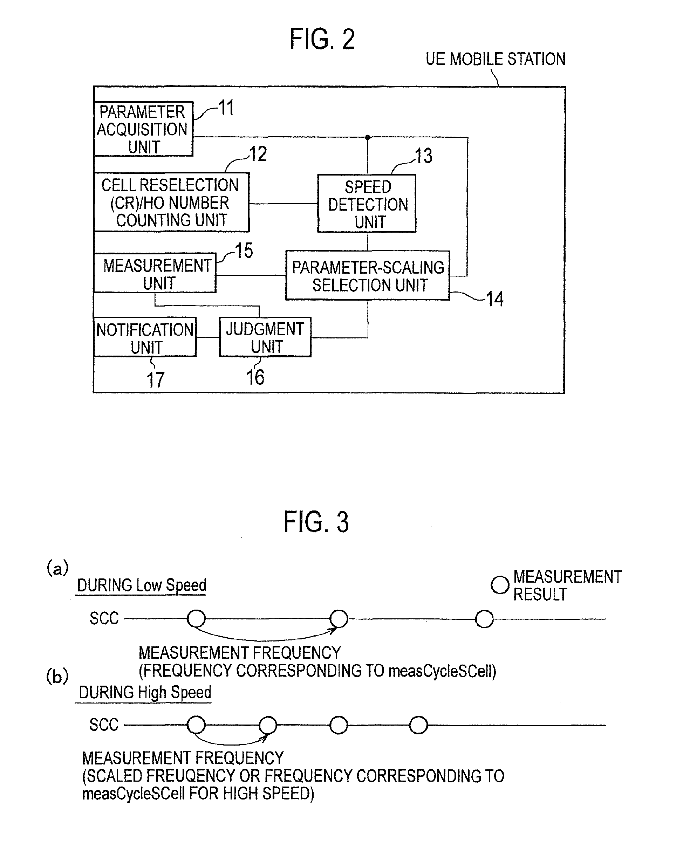

As shown in Fig. 2, the mobile station UE according to this embodiment includes: a parameter acquisition unit 11; a cell reselection (CR)/HO number counting unit 12; a speed detection unit 13; a parameter-scaling selection unit 14; a measurement unit 15; a judgment unit 16; and a notification unit 17.

The parameter acquisition unit 11 is configured to acquire network parameters from the network. Assumable network parameters include: the measurement frequency (measurement cycle) of a measurement procedure performed by the mobile station UE; a threshold used for detecting the speed of the mobile station UE; a threshold for judging whether or not to carry out the cell reselection procedure; a threshold for judging whether or not to send a "Measurement Report (MR) "; and the like.

The parameter acquisition unit 11 may be configured to acquire the network parameters by way of broadcast information, or instead may be configured to acquire the network parameters when receiving a measurement command.

The cell reselection (CR)/HO number counting unit 12 is configured to count the number of cell reselection procedures or handover procedures carried out by the mobile station UE in a time period (TCRₘₐₓ) notified by the network in advance.

Here, the cell reselection (CR)/HO number counting unit 12 is configured to notify the speed detection unit 13 of the number thus counted.

The speed detection unit 13 is configured to detect the speed of the mobile station UE. Specifically, the speed detection unit 13 may be configured to detect the speed of the mobile station UE by using the above network parameters, the number of cell reselection procedures or handover procedures of the mobile station UE notified by the cell reselection (CR)/HO number counting unit 12, and the like.

For example, the speed detection unit 13 may be configured to judge that the speed of the mobile station UE is "Medium" or "High" when the number of cell reselection procedures or handover procedures of the mobile station UE exceeds the number (NCR_M or NCR_H) notified by the network in advance.

Meanwhile, the speed detection unit 13 may be configured to judge that the speed of the mobile station UE is "Low" when the number of cell reselection procedures or handover procedures of the mobile station UE does not exceed the number (NCR_M) notified by the network in advance.

Here, as "TCRₘₐₓ", "NCR_M", and "NCR_H", the cell reselection (CR)/HO number counting unit 12 and the speed detection unit 13 may use values acquired by the parameter acquisition unit 11, or instead may use values set uniquely in the mobile station UE.

In addition, the speed detection unit 13 may be configured to detect the speed of the mobile station UE by using a function, such as a detection function by way of Doppler frequency measurement, implemented uniquely in the speed detection unit itself.

The parameter-scaling selection unit 14 is configured to determine a network parameter (e.g., measurement frequency) to be used by the mobile station UE, based on the speed of the mobile station UE detected by the speed detection unit 13.

Specifically, the parameter-scaling selection unit 14 may be configured to select a network parameter (e.g., measurement frequency) corresponding to the speed of the mobile station UE detected by the speed detection unit 13.

For example, the parameter-scaling selection unit 14 may be configured to select among measurement frequencies corresponding to the respective moving velocities, which are notified by the network in advance.

Here, the parameter-scaling selection unit 14 may be configured to determine measurement frequencies corresponding to the respective moving velocities by itself in such a way that the determined measurement frequencies do not exceed the measurement frequencies corresponding to the respective moving velocities, which are notified by the network in advance.

Alternatively, the parameter-scaling selection unit 14 may be configured to scale a network parameter (e.g., measurement frequency) based on the speed of the mobile station UE detected by the speed detection unit 13.

For example, the parameter-scaling selection unit 14 may be configured to scale a measurement frequency set for "Low" by using a coefficient for "Medium" or a coefficient for "High" notified by the network in advance.

In this case, the parameter-scaling selection unit 14 may be configured to change the measurement frequency set for "Low" only when the speed of the mobile station UE detected by the speed detection unit 13 is equal to or higher than a predetermined threshold ("Medium" or "High").

Further, as shown in Figs. 3(a) and 3(b), the parameter-scaling selection unit 14 may be configured to calculate the measurement frequency of a measurement procedure on the Scell or another cell on the SCC by multiplying "measCycleScell", which is notified by the network, by a coefficient corresponding to the speed notified by the network in advance.

Meanwhile, the parameter-scaling selection unit 14 may be configured such that, in the case where "CA" is performed, the parameter-scaling selection unit determines the measurement frequency of a measurement procedure on the Scell in "deactive state" or on the SCC of the Scell in "deactive state" when this measurement procedure is carried out.

Alternatively, the parameter-scaling selection unit 14 may be configured such that, in the case where "CA" is performed, the parameter-scaling selection unit determines the measurement frequency of a measurement procedure on the Pcell or on the PCC when this measurement procedure is carried out.

In other words, the parameter-scaling selection unit 14 may be configured to determine the measurement frequency based on a parameter notified by the network.

Here, the parameter-scaling selection unit 14 may be configured to determine the measurement frequency for the Pcell or the PCC based on a parameter notified by the network.

Further, the parameter-scaling selection unit 14 may be configured to determine the measurement frequency for the Scell or the SCC based on a parameter notified by the network.

The measurement unit 15 is configured to carry out measurement procedures on the serving cell and neighboring cells at the measurement frequency determined by the parameter-scaling selection unit 14.

The judgment unit 16 is configured to judge whether or not to carry out the cell reselection procedure or whether or not to send a "Measurement Report (MR)", based on the network parameters described above and the result of measurement performed by the measurement unit 15.

The notification unit 17 is configured to send a "Measurement Report (MR)" to the network if the judgment unit 16 judges that the "Measurement Report (MR)" is to be sent.

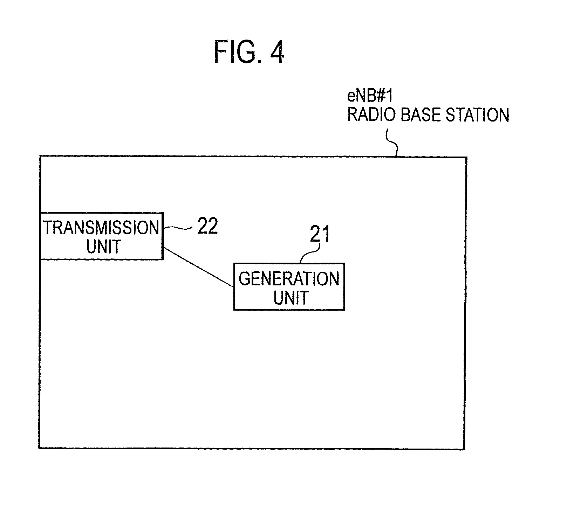

In the mobile communication system according to this embodiment, the radio base stations eNB#A to eNB#C basically have the same configuration, and thus the configuration of the radio base station eNB#A will be described below on behalf of these radio base stations. As shown in Fig. 4, the radio base station eNB#A includes a generation unit 21 and a transmission unit 22.

The generation unit 21 is configured to generate network parameters to be sent to the mobile station UE.

For example, the generation unit 21 is configured to generate, as the network parameters: the measurement frequency (measurement cycle) of a measurement procedure performed by the mobile station UE; a threshold used for detecting the speed of the mobile station UE; a threshold for judging whether or not to carry out the cell reselection procedure; a threshold for judging whether or not to send a "Measurement Report (MR) "; and the like.

Here, the generation unit 21 may be configured to generate the network parameters autonomously, or instead may be configured to generate the network parameters based on information notified by an upper node.

The transmission unit 22 is configured to send the mobile station UE the network parameters generated by the generation unit 21. For example, the transmission unit 22 may be configured to send the network parameters by way of broadcast information, or instead may be configured to send the network parameters by way of an individual message such as a measurement command.

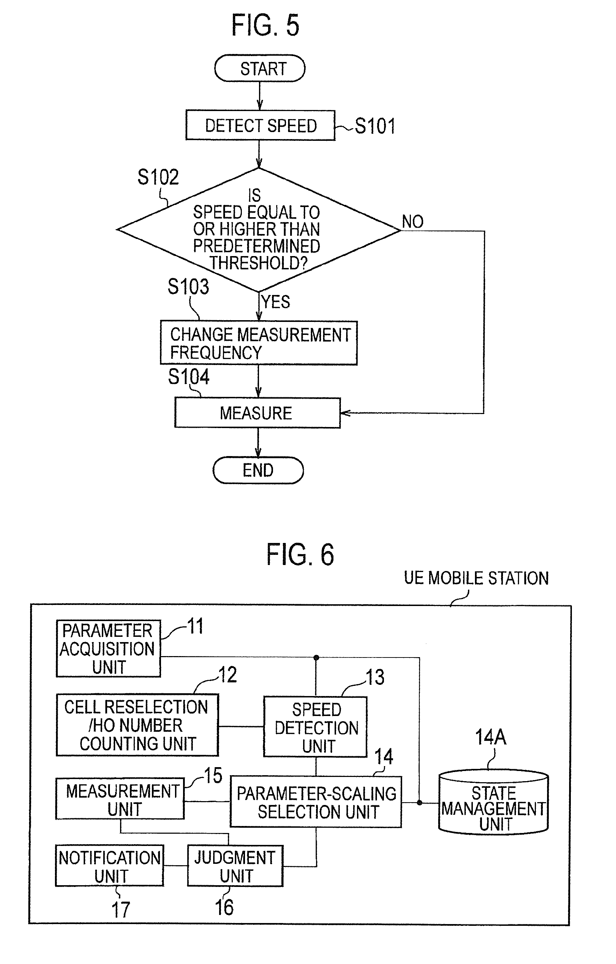

An operation of the mobile station UE according to this embodiment will be described below with reference to Fig. 5.

As shown in Fig. 5, in Step S101, the mobile station UE detects the speed of the mobile station UE.

In Step S102, the mobile station UE judges whether or not the detected speed is equal to or higher than a predetermined threshold (e.g., "Medium" or "High").

If "Yes", the operation proceeds to Step S103; if "No", the operation proceeds to Step S104.

In Step S103, the mobile station UE changes the measurement frequency notified by the network in advance, on the basis of the detected speed.

In Step S104, the mobile station UE performs a measurement procedure by using either the measurement frequency notified by the network in advance or the measurement frequency changed in Step S103.

The mobile communication system according to the first embodiment of the present invention makes it possible to perform a measurement procedure (such as a measurement procedure on the Scell or the SCC) appropriately at the measurement frequency corresponding to the speed of the mobile station UE.

### (First Modification)

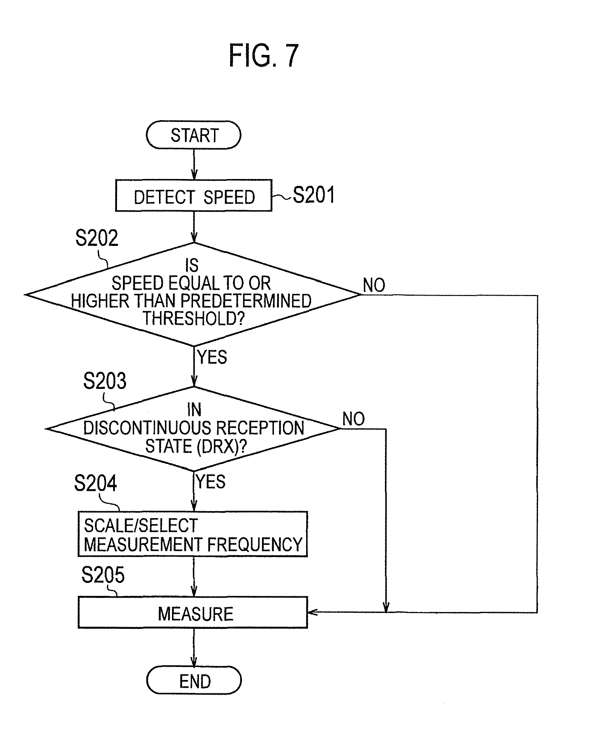

With reference to Figs. 6 and 7, a mobile communication system according to a first modification of the present invention will be described below in terms of the difference from the mobile communication system according to the first embodiment described above.

As shown in Fig. 6, the mobile station UE according to this embodiment includes a state management unit 14A in addition to the configuration shown in Fig. 2.

The state management unit 14A is configured to perform management on whether or not the mobile station UE is in discontinuous reception (DRX) state.

In addition, the parameter acquisition unit 11 is configured to acquire "measCyclePcell", which indicates the measurement frequency of a measurement procedure on the Pcell or the PCC, from the network.

Further, the parameter-scaling selection unit 14 may be configured to determine the above measurement frequency on the basis of whether or not the mobile station UE is in discontinuous reception state.

For example, the parameter-scaling selection unit 14 may be configured to refer to the state management unit 14A and determine the measurement frequency of a measurement procedure on the Pcell or the PCC when the mobile station UE is in discontinuous reception state.

For example, the parameter-scaling selection unit 14 may be configured to calculate the measurement frequency of a measurement procedure on the Pcell or the PCC by multiplying "measCyclePcell", which is notified by the network, by a coefficient corresponding to the speed notified by the network in advance.

Note that the parameter-scaling selection unit 14 may be configured to refer to the state management unit 14A and determine the measurement frequency of a measurement procedure on the Scell or the SCC when the mobile station UE is in discontinuous reception state.

An operation of the mobile station UE according to the first modification will be described below with reference to Fig. 7.

As shown in Fig. 7, in Step S201, the mobile station UE detects the speed of the mobile station UE.

In Step S202, the mobile station UE judges whether or not the detected speed is equal to or higher than a predetermined threshold (e.g., "Medium" or "High").

If "Yes", the operation proceeds to Step S203; if "No", the operation proceeds to Step S205.

In Step S203, the mobile station UE judges whether or not the mobile station UE is in discontinuous reception state.

If "Yes", the operation proceeds to Step S204; if "No", the operation proceeds to Step S205.

In Step S204, the mobile station UE changes the measurement frequency notified by the network in advance, based on the detected speed.

In Step S205, the mobile station UE performs a measurement procedure by using either the measurement frequency notified by the network in advance or the measurement frequency changed in Step S204.

The mobile communication system according to the first embodiment of the present invention makes it possible to perform a measurement procedure (such as a measurement procedure on the Pcell or the PCC) appropriately at the measurement frequency corresponding to the speed of the mobile station UE.

The characteristics of this embodiment described above may be expressed in the following way.

A first characteristic of this embodiment is a mobile station UE. The gist of the mobile station UE is to include: a speed detection unit 13 configured to detect the speed of the mobile station UE; and a parameter-scaling selection unit 14 (a determination unit) configured to determine a measurement frequency based on the detected speed, the measurement frequency being a frequency at which the mobile station UE performs a measurement procedure.

In the first characteristic of this embodiment, the parameter-scaling selection unit 14 may be configured to determine the above measurement frequency based on a parameter notified by a network.

In the first characteristic of this embodiment, the parameter-scaling selection unit 14 may be configured to determine the measurement frequency for a Pcell or a PCC based on a parameter notified by a network.

In the first characteristic of this embodiment, the parameter-scaling selection unit 14 may be configured to determine the measurement frequency for a Scell or a SCC based on a parameter notified by a network.

In the first characteristic of this embodiment, the parameter-scaling selection unit 14 may be configured to determine the above measurement frequency based on whether or not the mobile station UE is in discontinuous reception state.

In the first characteristic of this embodiment, the parameter-scaling selection unit 14 may be configured to determine the measurement frequency for a Pcell or a PCC based on whether or not the mobile station UE is in discontinuous reception state.

In the first characteristic of this embodiment, the parameter-scaling selection unit 14 may be configured to determine the measurement frequency for a Scell or a SCC based on whether or not the mobile station UE is in discontinuous reception state.

A second characteristic of this embodiment is a mobile communication method. The gist of the mobile communication method is to include the steps of: causing a mobile station UE to detect the speed of the mobile station UE; and causing the mobile station UE to determine a measurement frequency based on the detected speed, the measurement frequency being a frequency at which the mobile station UE performs a measurement procedure.

A third characteristic of this embodiment is radio base stations eNB#1 to eNB#3. The gist of each radio base station is to include a transmission unit 22 configured to send a mobile station UE a network parameter used for the mobile station UE to determine the measurement frequency of a measurement procedure based on a speed.

Note that the operations of the radio base stations eNB#A to eNB#C and the mobile station UE described above may be implemented by means of hardware, a software module executed by a processor, or a combination of both.

The software module may be provided in any type of storage medium such as a RAM (Random Access Memory), a flash memory, a ROM (Read Only Memory), an EPROM (Erasable Programmable ROM), an EEPROM (Electronically Erasable and Programmable ROM), a register, a hard disk, a removable disk, or a CD-ROM.

The storage medium is connected to the processor so that the processor can read and write information from and to the storage medium. Alternatively, the storage medium may be integrated into the processor. In addition, the storage medium and the processor may be provided in an ASIC. The ASIC may be provided in the radio base stations eNB#A to eNB#C and the mobile station UE. Alternatively, the storage medium and the processor may be provided in the radio base stations eNB#A to eNB#C and the mobile station UE as a discrete component.

Hereinabove, the present invention has been described in detail using the embodiment described above; however, it is apparent to those skilled in the art that the present invention is not limited to the embodiment described herein. Modifications and variations of the present invention can be made without departing from the spirit and scope of the present invention defined by the description of the scope of claims. Thus, what is described herein is for illustrative purpose, and has no intention whatsoever to limit the present invention.

Note that the entire content of Japanese Patent Application No. 2011-174832 (filed on August 10, 2011) is incorporated herein by reference.

### INDUSTRIAL APPLICABILITY

As described above, the present invention can provide a mobile station and a mobile communication method capable of adjusting the measurement frequency of a measurement procedure, which is notified by a network, according to the speed of the mobile station.

### EXPLANATION OF THE REFERENCE NUMERALS

- eNB#A, eNB#B, eNB#C: radio base station
- UE: mobile station
- 11: parameter acquisition unit
- 12: cell reselection (CR)/HO number counting unit
- 13: speed detection unit
- 14: parameter-scaling selection unit
- 14A: state management unit
- 15: measurement unit
- 16: judgment unit
- 17: notification unit

## Claims

1. A mobile station comprising:
a speed detection unit configured to detect a speed of the mobile station; and
a determination unit configured to determine a measurement frequency based on the detected speed, the measurement frequency being a frequency at which the mobile station UE performs a measurement procedure.

2. The mobile station according to claim 1, wherein the determination unit determines the measurement frequency based on a parameter notified by a network.

3. The mobile station according to claim 1, wherein the determination unit determines the measurement frequency for a Pcell or a PCC based on a parameter notified by a network.

4. The mobile station according to claim 1, wherein the determination unit determines the measurement frequency for a Scell or a SCC based on a parameter notified by a network.

5. The mobile station according to claim 1 or 2, wherein the determination unit determines the measurement frequency on the basis of whether or not the mobile station is in discontinuous reception state.

6. The mobile station according to claim 1 or 2, wherein the determination unit determines the measurement frequency for a Pcell or a PCC on the basis of whether or not the mobile station is in discontinuous reception state.

7. The mobile station according to claim 1 or 2, wherein the determination unit determines the measurement frequency for a Scell or a SCC on the basis of whether or not the mobile station is in discontinuous reception state.

8. A mobile communication method comprising the steps of:
causing a mobile station to detect a speed of the mobile station; and
causing the mobile station to determine a measurement frequency on the basis of the detected speed, the measurement frequency being a frequency at which the mobile station performs a measurement procedure.

9. A radio base station comprising a transmission unit configured to send a mobile station a network parameter used for the mobile station to determine a measurement frequency of a measurement procedure based on a speed.
